# EUROPÄISCHE PATENTSCHRIFT

(11) **EP 1 775 313 B1**
(45) Veröffentlichungstag und Bekanntmachung des Hinweises auf die Patenterteilung: **05.12.2007**
(21) Anmeldenummer: 06018409.0
(22) Anmeldetag: 02.09.2006
(51) Int. Cl.: C08G 18/10, C08G 18/78

(54) **Zusammensetzung zur Herstellung von Polyharnstoffbeschichtungen**
Composition for producing polyurea coatings
Compositions pour la production de revêtements polyurés

(30) Priorität: 04.10.2005 DE 102005047560
(43) Veröffentlichungstag der Anmeldung: 18.04.2007
(73) Patentinhaber: Bayer MaterialScience AG, 51368 Leverkusen (DE)
(72) Erfinder: Mager, Michael, Dr., 51375 Leverkusen (DE); Homann, Malte, Dr., 51519 Odenthal (DE); Aus der Wieschen, Andreas, 51371 Leverkusen (DE)

(56) Entgegenhaltungen:
- EP-A1- 0 712 840
- GB-A- 994 890
- US-A- 4 581 433
- US-A1- 2005 096 449

## Beschreibung

Die Erfindung betrifft neuartige Zusammensetzungen enthaltend Polyisocyanate mit Allophanat-Gruppen und Polyamine, vorzugsweise aromatische Diamine, und gegebenenfalls weitere, vorzugsweise uretdiongruppenaufweisende Polyisocyanate, sowie deren Verwendung zur Herstellung schnell aushärtender Polyharnstoffbeschichtungen.

Beschichtungen aus Polyharnstoffen sind insbesondere deshalb interessant, weil die Reaktion von Polyisocyanaten mit Aminen außerordentlich schnell verläuft und die beschichteten Oberflächen sehr schnell (wieder) gebrauchsfähig sind. Darüber hinaus führt die Anwesenheit von Hamstoff-Gruppen in Polyurethanen zu einem sehr günstigen Verhältnis von Härte zu Elastizität, was in vielen Beschichtungsanwendungen sehr erwünscht ist.

Polyharnstoffe, welche zur Beschichtung von Rohren eingesetzt werden können, sind beispielsweise in EP-A 0 936 235 beschrieben. Sie werden erhalten durch Mischen eines flüssigen aliphatischen Polyisocyanats, welches daneben noch ein flüssiges Epoxidharz enthalten kann, mit einem flüssigen aromatischen Polyamin. Diese Beschichtungen sind jedoch sehr spröde.

Zur Flexibilisierung solcher Polyhamstoff-Beschichtungen können den aromatischen Diaminen gemäß EP-A 1 486 522 beispielsweise Polyhydroxyverbindungen wie Polyether- oder Polyesterpolyole, Prepolymere des Hexamethylendiisocyanats (HDI), sowie dessen Di- und Trimers oder auch aminterminierte Polyether zugesetzt werden. Diese Möglichkeiten zur Flexibilisierung der Polyhamstoff-Beschichtungen weisen jedoch folgende Nachteile auf: beim Einsatz von Polyethern und Polyestern steigt die Härtungszeit beträchtlich an, da die NCO/OH-Reaktion deutlich langsamer als die NCO/NH₂-Reaktion ist. Darüber hinaus weisen Polyester eine hohe Viskosität auf, was deren Verarbeitung in diesen hoch reaktiven Mischungen erheblich erschwert. Auch einfache Prepolymere von HDI oder dessen Oligomeren zeigen eine zu hohe Viskosität und darüber hinaus Unverträglichkeiten im ausreagierten Polyharnstoff (inhomogene Beschichtungen). Da die Reaktivität von aminterminierten Polyethern und aromatischen Diaminen sehr unterschiedlich ist, resultieren auch hierbei inhomogene Systeme.

Aufgabe der vorliegenden Erfindung war daher die Bereitstellung von Zusammensetzungen, welche eine niedrige Viskosität aufweisen und bei Umgebungsbedingungen in kurzer Zeit zu homogenen, flexibilisierten Polyharnstoffen ausgehärtet werden können.

Überraschend wurde nun gefunden, dass Zusammensetzungen, die bestimmte (cyclo)aliphatische Polyisocyanat-Prepolymere mit Allophanat-Gruppen in Kombination mit Polyaminen sowie gegebenenfalls weiteren Polyisocyanaten enthalten, bei Umgebungsbedingungen in kurzer Zeit zu homogenen, flexiblen Polyharnstoffen ausgehärtet werden können.

Gegenstand der Erfindung sind Zusammensetzungen enthaltend
A) ein Polyisocyanat-Prepolymer, das über Allophanatgruppen gebundene Polyethergruppen aufweist und
B) Polyamine mit mindestens zwei primären Aminogruppen, sowie
C) gegebenenfalls weitere Polyisocyanate.

Die in Komponente A) eingesetzten Allophanate sind erhältlich, indem
A1) ein oder mehrere aliphatische und/oder cycloaliphatische Polyisocyanate mit
A2) einer oder mehreren Polyhydroxyverbindungen, wobei wenigstens eine ein Polyetherpolyol ist,
   zu einem NCO-funktionellen Polyurethan-Prepolymer umgesetzt werden und dessen so gebildete Urethangruppen dann anschließend unter Zugabe von
A3) Polyisocyanaten, welche verschieden von denen aus A1) sein können und
A4) Katalysatoren und
A5) gegebenenfalls Stabilisatoren
teilweise oder vollständig allophanatisiert werden.

Beispiele für geeignete aliphatische und cycloaliphatische Polyisocyanate A1) sind Di- oder Triisocyanate wie Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI).

Bevorzugt werden in den Komponenten A1) und A3) Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanat, IPDI) als Polyisocyanate eingesetzt. Ein ganz besonders bevorzugtes Polyisocyanat ist HDI.

Bevorzugt werden in A1) und A3) Polyisocyanate des gleichen Typs eingesetzt.

Als Polyhydroxyverbindungen der Komponente A2) können alle dem Fachmann bekannten Polyhydroxyverbindungen eingesetzt werden, welche bevorzugt eine mittlere OH-Funktionalität von größer oder gleich 1,5 aufweisen, wobei wenigstens eine der in A2) enthaltenen Verbindungen ein Polyetherpolyol sein muss.

Geeignete in A2) einsetzbare Polyhydroxyverbindungen sind niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyetherpolyole, Polyesterpolyole, Polycarbonatpolyole sowie Polythioetherpolyole. Bevorzugt werden in A2) als Polyhydroxyverbindungen ausschließlich Substanzen der vorstehend genannten Art auf Polyetherbasis eingesetzt.

Bevorzugt weisen die in A2) eingesetzten Polyetherpolyole zahlenmittlere Molekulargewichte Mₙ von 300 bis 20.000 g/mol, besonders bevorzugt 1.000 bis 12.000, ganz besonders bevorzugt 2.000 bis 6.000 g/mol auf. Ferner besitzen sie bevorzugt eine mittlere OH-Funktionalität von ≥ 1,5, besonders bevorzugt ≥ 1,90, besonders bevorzugt ≥ 1,95.

Solche Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich.

Besonders geeignete Polyetherpolyole der Komponente A2) sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Die Herstellung der isocyanatgruppenhaltigen Polyurethanprepolymere erfolgt durch Umsetzung der Polyhydroxyverbindungen der Komponente A2) mit überschüssigen Mengen der Polyisocyanate aus A1). Die Umsetzung erfolgt im Allgemeinen bei Temperaturen von 20 bis 140°C, bevorzugt bei 40 bis 110°C, gegebenenfalls unter der Verwendung von aus der Polyurethanchemie an sich bekannten Katalysatoren wie beispielsweise Zinn-Seifen, Dibutylzinndilaurat oder tertiären Aminen, z.B. Triethylamin oder Diazabicyclooctan. Die Allophanatisierung erfolgt dann anschließend durch Umsetzung der resultierenden isocyanatgruppenhaltigen Polyurethanprepolymere mit Polyisocyanaten A3), welche gleich oder verschieden zu denen der Komponente A1) sein können, wobei geeignete Katalysatoren A4) zur Allophanatisierung zugesetzt werden. Typischerweise werden anschließend zur Stabilisierung noch saure Additive der Komponente A5) zugesetzt und überschüssiges Polyisocyanat, z.B. durch Dünnschichtdestillation oder Extraktion aus dem Produkt entfernt.

Das Molverhältnis der OH-Gruppen der Verbindungen der Komponente A2) zu den NCO-Gruppen der Polyisocyanate aus A1) und A3) beträgt bevorzugt 1 : 1,5 bis 1 : 20, besonders bevorzugt 1 : 2 bis 1 : 15, ganz besonders bevorzugt 1 : 2 bis 1 : 10.

Zur Allophanatisierung werden in A4) bevorzugt Zink(II)-Verbindungen als Katalysatoren eingesetzt, wobei dies besonders bevorzugt Zink-Seifen längerkettiger, verzweigter oder unverzweigter, aliphatischer Carbonsäuren sind. Bevorzugte Zink(II)-Seifen sind solche auf Basis von 2-Ethylhexansäure sowie den linearen, aliphatischen C₄- bis C₃₀-Carbonsäuren. Ganz besonders bevorzugte Verbindungen der Komponente A4) sind Zn(II)bis(2-ethylhexanoat), Zn(II)bis(n-oktoat), Zn(II)bis(stearat) oder deren Mischungen. Diese Allophanatisierungskatalysatoren werden typischerweise in Mengen von bis zu 5 Gew.-%, bezogen auf die gesamte Reaktionsmischung, eingesetzt. Bevorzugt werden 5 bis 500 ppm des Katalysators, besonders bevorzugt 20 bis 200 ppm, eingesetzt.

Gegebenenfalls können vor, während oder nach der Allophanatisierung auch stabilisierend wirkende Zusätze A5) verwendet werden. Dies können saure Additive wie Lewis-Säuren (Elektronenmangelverbindungen) oder Broenstedt-Säuren (Protonensäuren) oder solche Verbindungen sein, welche unter Reaktion mit Wasser derartige Säuren freisetzen. Dies sind beispielsweise anorganische oder organische Säuren oder auch neutrale Verbindungen wie Säurehalogenide oder Ester sein, welche mit Wasser zu den entsprechenden Säuren reagieren. Genannt seien hier insbesondere Salzsäure, Phosphorsäure, Phosphorsäureester, Benzoylchlorid, Isophtalsäuredichlorid, p-Toluolsulfonsäure, Ameisensäure, Essigsäure, Dichloressigsäure und 2-Chlorpropionsäure. Die vorgenannten sauren Additive können auch zur Deaktivierung des Allophanatisierungskatalysators eingesetzt werden. Sie verbessern darüber hinaus die Stabilität der erfindungsgemäß hergestellten Allophanate, z.B. bei thermischer Belastung während der Dünnschichtdestillation oder auch nach der Herstellung bei Lagerung der Produkte. Die sauren Additive werden in der Regel mindestens in einer solchen Menge zugegeben, dass das Molverhältnis der sauren Zentren des sauren Additivs und des Katalysators mindestens 1:1 beträgt. Vorzugsweise wird jedoch ein Überschuss des sauren Additivs zugesetzt. Sofern überhaupt saure Additive verwendet werden sind dies bevorzugt organische Säuren wie Carbonsäuren oder Säurehalogenide wie Benzoylchlorid oder Isophtalyldichlorid.

Falls gewünscht kann nach Abschluss der Allophanatisierung überschüssiges monomeres Diisocyanat abgetrennt werden. Die Dünnschichtdestillation ist das hierzu bevorzugte Verfahren und wird in der Regel bei Temperaturen von 100 bis 160°C und einem Druck von 0,01 bis 3 mbar durchgeführt. Der Restmonomergehalt beträgt danach bevorzugt weniger als 1 Gew.-%, besonders bevorzugt weniger als 0,5 Gew.-% (Diisocyanat).

Die gesamten Verfahrensschritte zur Herstellung des Polyisocyanatprepolymers mit Allophanatgruppen können gegebenenfalls in Anwesenheit inerter Lösungsmittel durchgeführt werden. Als inerte Lösungsmittel sind dabei solche zu verstehen, die unter den gegebenen Reaktionsbedingungen nicht mit den Edukten reagieren. Beispiele sind Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebige Gemische derartiger Lösungsmittel. Bevorzugt werden die erfindungsgemäßen Umsetzungen jedoch lösemittelfrei durchgeführt.

Die Zugabe der beteiligten Komponenten kann sowohl bei der Herstellung der isocyanatgruppenhaltigen Prepolymere als auch bei Allophanatisierung in beliebiger Reihenfolge erfolgen. Bevorzugt ist jedoch die Zugabe des Polyetherpolyols A2) zum vorgelegten Polyisocyanat der Komponenten A1) und A3) und schließlich die Zugabe des Allophanatisierungskatalysators A4).

In einer bevorzugten Ausführungsform der Erfindung werden die Polyisocyanate der Komponenten A1) und A3) in einem geeigneten Reaktionsgefäß vorgelegt und, gegebenenfalls unter Rühren, auf 40 bis 110°C erwärmt. Nach Erreichen der gewünschten Temperatur werden unter Rühren dann die Polyhydroxyverbindungen der Komponente A2) zugegeben und solange gerührt, bis der theoretische NCO-Gehalt des nach der gewählten Stöchiometrie zu erwartenden Polyurethanprepolymers erreicht oder geringfügig unterschritten ist. Jetzt wird der Allophanatisierungskatalysator A4) zugegeben und die Reaktionsmischung solange auf 50 und 100°C erwärmt, bis der gewünschte NCO-Gehalt erreicht oder geringfügig unterschritten ist. Nach Zugabe von sauren Additiven als Stabilisatoren A5) wird das Reaktionsgemisch abgekühlt oder direkt der Dünnschichtdestillation zugeführt. Dabei wird das überschüssige Polyisocyanat bei Temperaturen von 100 bis 160°C und einem Druck von 0,01 bis 3 mbar bis auf einen Restmonomergehalt von weniger als 1 %, bevorzugt weniger als 0,5 %, abgetrennt. Nach der Dünnschichtdestillation kann gegebenenfalls weiterer Stabilisator zugegeben werden.

Die so erhältlichen und in A) einzusetzenden Allophanate haben typischerweise zahlenmittlere Molekulargewichte von 700 bis 50.000 g/mol, bevorzugt 1.500 bis 8.000 g/mol und besonders bevorzugt 1.500 bis 4.000 g/mol.

Darüberhinaus haben sie typischerweise Viskositäten bei 23°C von 500 bis 100.000 mPas, bevorzugt 500 bis 50.000 mPas und besonders bevorzugt von 1.000 bis 7.500 mPas, ganz besonders bevorzugt von 1.000 bis 3.500 mPas.

Die wie vorstehend beschriebenen Allophanate entsprechen typischerweise der allgemeinen Formel (I), 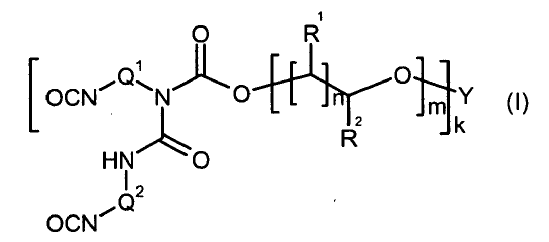 worin
- Q¹ und Q²: unabhängig voneinander für den Rest eines linearen und/oder cyclischen aliphatischen Diisocyanats der genannten Art, bevorzugt -(CH₂)₆-, stehen,
- R¹ und R²: unabhängig voneinander für Wasserstoff oder einen C₁-C₄-Alkylrest stehen, wobei R¹ und R² bevorzugt Wasserstoff und/oder Methylgruppen sind, wobei in jeder Wiederholungseinheit m die Bedeutung von R¹ und R² verschieden sein kann,
- Y: der Rest eines Starter-Moleküls der genannten Art mit einer Funktionalität von 2 bis 6 ist, und somit
- k: für einen Wert von 2 bis 6 steht, welche durch Verwendung von verschiedenen Starter-Molekülen selbstverständlich auch keine ganze Zahl sein muss, sowie
- m: bevorzugt so vielen Monomereinheiten entspricht, dass das zahlenmittlere Molekulargewicht des der Struktur zugrunde liegenden Polyethers 300 bis 20.000 g/mol beträgt und
- n: 1 oder 3 ist.

Vorzugsweise werden Allophanate erhalten, welche der allgemeinen Formel (II) entsprechen, 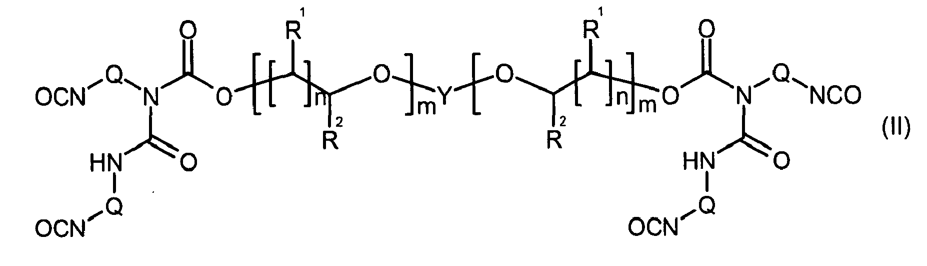 worin
- Q: für den Rest eines linearen und/oder cyclischen aliphatischen Diisocyanats der genannten Art, bevorzugt -(CH₂)₆-, steht,
- R¹ und R²: unabhängig voneinander für Wasserstoff oder für einen C₁-C₄-Alkylrest stehen, wobei R¹ und R² bevorzugt Wasserstoff und/oder Methylgruppen sind wobei in jeder Wiederholungseinheit m die Bedeutung von R¹und R² verschieden sein kann,
- Y: für den Rest eines difunktionellen Starter-Moleküls der genannten Art steht und
- m: so vielen Monomereinheiten entspricht, dass das zahlenmittlere Molekulargewicht des der Struktur zugrunde liegenden Polyethers 300 bis 20.000 g/mol beträgt und
- n: gleich 1 oder 3 ist.

Da zur Herstellung der Allophanate der Formel (I) und (II) in der Regel Polyole auf Basis von polymerisiertem Ethylenoxid, Propylenoxid oder Tetrahydrofuran eingesetzt werden, so ist in den Formeln (I) und (II) im Falle von m = 1 besonders bevorzugt wenigstens ein Rest von R¹ und R² Wasserstoff, im Falle von m = 3 sind R¹ und R² Wasserstoff.

Geeignete Polyamine B) sind alle aromatischen, aliphatischen, cycloaliphatischen oder heterocyclischen, bevorzugt aromatischen, Verbindungen mit mindestens 2 primären oder sekundären, bevorzugt mindestens 2 primären, Aminogruppen pro Molekül.

Besonders geeignete Polyamine sind aromatische Diamine, beispielsweise gegebenenfalls substituierte Toluylendiamine oder Methylenbis(aniline). Im einzelnen seien genannt Diethyltoluylendiamine, Dimethylthiotoluylendiamine, insbesondere deren Isomere mit Amino-Gruppen in 2,4- und 2,6-Position, sowie Gemische daraus, 4,4'-Methylenbis(2-isopropyl-6-methylanilin), 4,4'-Methylenbis(2,6-diisopropylanilin), 4,4'-Methylenbis(2-ethyl-6-methylanilin), sowie 4,4'-Methylenbis(3-chloro-2,6-diethylanilin).

Als weitere Polyisocyanate C) können prinzipiell alle an sich bekannten Folgeprodukte aliphatischer bzw. cycloaliphatischer Polyisocyanate mit Uretdion-, Biuret- und/oder Isocyanurat-Struktur eingesetzt werden, welche durch Modifizierung an sich bekannter monomerer Diisocyanate wie Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI), erhalten werden können.

Bevorzugt enthalten die erfindungsgemäßen Zusammensetzungen Polyisocyanate C) mit Uretdion-Struktur, besonders bevorzugt Uretdione auf Basis Hexamethylendiisocyanat (HDI).

Selbstverständlich können den erfindungsgemäßen Zusammensetzungen die üblichen Hilfs- und Zusatzstoffe wie Pigmente, (Lack-) Additive, Thixotropiermittel, Verlaufsmittel, Emulgatoren und Stabilisatoren zugegeben werden.

Der Zusatz von Katalysatoren zur Aushärtung ist typischerweise nicht nötig, jedoch prinzipiell möglich.

Die Herstellung der erfindungsgemäßen Zusammensetzungen erfolgt durch Mischen der Komponenten A), B) und gegebenenfalls C) in beliebiger Reihenfolge vor oder während der Applikation, beispielsweise als Beschichtung. Wird eine Komponente C) eingesetzt, so wird diese vorzugsweise erst mit der Komponente A) gemischt und die resultierende Mischung danach mit der Komponente B) ausgehärtet.

Die erfindungsgemäßen Zusammensetzungen können mit den an sich bekannten Techniken wie Sprühen, Tauchen, Fluten oder Gießen auf Oberflächen appliziert werden. Nach dem Ablüften gegebenenfalls vorhandener Lösungsmittel, wobei die Zusammensetzungen vorzugsweise frei von Lösungsmitteln sind, härten die Beschichtungen dann bei Umgebungsbedingungen, insbesondere bei -20°C bis +40 °C, aber auch bei höheren Temperaturen von beispielsweise +40 bis +200 °C.

Die genannten Zusammensetzungen können beispielsweise auf Metalle wie Eisen, Stahl, Aluminium, Bronze, Messing, Kupfer, Kunststoffe, keramische Materialien wie Glas, Beton, Stein sowie Naturstoffe aufgebracht werden, wobei die genannten Substrate zuvor einer gegebenenfalls notwendigen Vorbehandlung unterzogen worden sein können. Bevorzugt werden die Zusammensetzungen auf Eisen oder Stahl aufgebracht. Aufgrund ihrer raschen Aushärtung sind die erfindungsgemäßen Zusammensetzungen insbesondere auch zur (Innen-) Beschichtung von Rohren geeignet, speziell Rohre zur Beförderung von Mineralöl, (Trink-) Wasser, Gas oder Chemikalien.

### Beispiele

Sofern nicht anders angegeben, beziehen sich alle Prozentangaben auf das Gewicht.

Die NCO-Gehalte wurden mittels Rücktitration von im Überschuss zugesetztem Dibutylamin mit Salzsäure bestimmt.

Die Viskositätsmessung erfolgte mit einem Rotationsviskosimeter der Firma Haake bei 23°C.

Die Dehnung und die Zugfestigkeit wurden in einem Zugversuch nach EN ISO 527 bestimmt. Die Bestimmung der Shore-Härte erfolgte mit einem Handgerät der Firma Erichsen.

Desmodur N 3400 (Bayer MaterialScience AG, Leverkusen, DE) ist ein auf Hexamethylendiisocyanat basierendes uretdiongruppenhaltiges Polyisocyanat mit einem NCO-Gehalt von 21,8 %.

Ethacure 300 (Albemarle Corporation) ist ein aus 3,5-Dimethylthiotoluylen-2,4-diamin und 3,5-Dimethylthiotoluylen-2,6-diamin bestehendes Isomerengemisch mit einem Isocyanat-Äquivalentgewicht von 107 g.

BYK A 530 ist Additiv, erhältlich von der Firma Byk Chemie, Wesel, DE.

### Beispiel 1:

### a) Herstellung eines Polyisocyanats mit Allophanat-Gruppen:

Zu 2520,7 g 1,6-Hexandiisocyanat wurden zunächst 90 mg Isophtalsäuredichlorid gegeben, danach wurde die Mischung unter Rühren auf 100°C erwärmt. Nun wurden innerhalb von 3 Stunden 1978,5 g eines Polypropylenglycols zugegeben, welcher mittels DMC-Katalyse (basenfrei) hergestellt worden war (Gehalt ungesättigter Gruppen < 0,01 meq/g, Molgewicht 2 000 g/mol, OH-Zahl 56 mg KOH/g, theoretische Funktionalität 2). Die Reaktionsmischung wurde danach solange auf 100°C erwärmt, bis ein NCO-Gehalt von 26,1 % erreicht war. Nun wurde die Temperatur auf 90°C vermindert und die Reaktionsmischung nach Zugabe von 360 mg Zink(II)bis(2-ethylhexanoat) solange gerührt, bis der NCO-Gehalt bei 24,3 % lag. Nach Zugabe von 360 mg Isophtalsäuredichlorid wurde das überschüssige 1,6-Hexandiisocyanat bei < 1 mbar und 140°C mittels Dünnschichtdestillation entfernt. Das so erhaltene Produkt wies folgende Kennzahlen auf:

| | |
|---|---|
| NCO-Gehalt: | 5,81 % |
| Viskosität (23°C): | 2 200 mPas |

### b) Herstellung einer Zusammensetzung aus dem Polyisocyanat mit Allophanat-Gruppen aus a) und einem aromatischen Diamin:

100 Gew.-Teile des nach a) hergestellten Prepolymers wurden mit 13,5 Gew.-Teilen Ethacure 300 vermischt und zu einem 2 mm dicken Film ausgegossen. Nach der Aushärtung (20 h bei 40°C, dann 3 d Raumtemperatur) wurde ein transparenter, homogener Kunststoff mit folgenden mechanischen Kennwerten erhalten:

| | |
|---|---|
| Dehnung: | 46 % |
| Zugfestigkeit: | 48 MPa |
| Shore-D-Härte: | 25 |

### Beispiel 2:

Ausgehend von einem analog Beispiel 1 a) hergestellten Allophanat wurden Zusammensetzungen mit einem weiteren Polyisocyanat und einem aromatischen Diamin formuliert, ausgehärtet und anschließend geprüft.

Die in der nachfolgenden Tabelle angegebenen Komponenten wurden in der dort ebenfalls angegebenen Menge unter Rühren zusammengegeben und innerhalb der Topfzeit von ca. 25 min zu einem 2 mm dicken Film ausgegossen. Nach der Aushärtung (7 Tage bei Raumtemperatur) wurden transparente, homogene Kunststoffe erhalten, von welchen anschließend die mechanischen Eigenschaften gemessen wurden (siehe Tabelle).

**Tabelle**

| | Zusammensetzung 1 | Zusammensetzung 2 |
|---|---|---|
| | Menge [g] | Menge [g] |
| Allophanat aus Bsp. 1 a) | 290,5 | 219,0 |
| Desmodur^{®} N 3400 | 124,5 | 146,0 |
| Ethacure^{®} 300 | 107,0 | 107,0 |
| Byk A 530 | 5,22 | 4,72 |
| Dehnung [%] | 95 | 90 |
| Zugfestigkeit [MPa] | 19,5 | 22 |
| Shore-D-Härte | 52 | 64Ab |

### Vergleichsbeispiel 1:

### a) Herstellung eines Polyisocyanats ohne Allophanat-Gruppen

Zu 734,7 g 1,6-Hexandiisocyanat wurden in 5 h unter Rühren bei 100°C erwärmt 865,0 g eines Polypropylenglycols zugegeben, welcher mittels DMC-Katalyse (basenfrei) hergestellt worden war (Gehalt ungesättigter Gruppen < 0,01 meq/g, Molgewicht 2 000 g/mol, OH-Zahl 56 mg KOH/g, theoretische Funktionalität 2). Die Reaktionsmischung wurde danach solange auf 100°C erwärmt, bis ein NCO-Gehalt von 20,4 % erreicht war. Nach Zugabe von 320 mg Dibutylphosphat wurde das überschüssige 1,6-Hexandiisocyanat bei < 1 mbar und 140°C mittels Dünnschichtdestillation entfernt. Das so erhaltene Produkt wies folgende Kennzahlen auf:

| | |
|---|---|
| NCO-Gehalt: | 3,21 % |
| Viskosität (23°C): | 1 360 mPas |

### b) Herstellung einer Zusammensetzung aus dem Polyisocyanat ohne Allophanat-Gruppen aus a) und einem aromatischen Diamin:

54,3 Gew.-Teile des nach a) des Vergleichsbeispiels 1 hergestellten Prepolymers wurden mit 4,3 Gew.-Teilen Ethacure 300 vermischt und zu einem 2 mm dicken Film ausgegossen. Nach der Aushärtung (20 h bei 40°C, dann 3 d Raumtemperatur) wurde ein transparenter, homogener Kunststoff erhalten. Die Shore-D-Härte konnte nicht bestimmt werden, da der Prüfkörper deutlich zu weich war.

### c) Herstellung einer Zusammensetzung aus dem Polyisocyanat ohne Allophanat-Gruppen aus a), einem weiteren Polyisocyanat und einem aromatischen Diamin:

30 Gew.-Teile des nach a) des Vergleichsbeispiels 1 hergestellten Prepolymers wurden mit 20 Gew.-Teilen Desmodur N 3400 und 12,9 Gew.-Teilen Ethacure 300 vermischt und zu einem ca. 2 mm dicken Film ausgegossen. Nach der Aushärtung (20 h bei 40°C, 3 d Raumtemperatur) wurde ein vollkommen intransparenter, inhomogener Kunststoff erhalten.

Abgesehen von der Inhomogenität des Kunststoffs, wurde überdies nur eine Shore-D-Härte von 38 erreicht, also deutlich weniger als bei der vergleichbaren Zusammensetzung 2 des Beispiels 2 (Gewichtsverhältnis des jeweils eingesetzten Polyisocyanats zu Desmodur N 3400 in beiden Fällen 6:4).

### Vergleichsbeispiel 2:

30 g eines Allophanats, hergestellt aus einem niedermolekularen Monoalkohol und HDI, mit einem NCO-Gehalt von 19,7 % und einer Viskosität von 415 mPas, wurden mit 14,3g Ethacure 300 gemischt (1 min Rühren) und danach zu einer 3 mm dicken Platte ausgegossen. Nach 2 h bei Raumtemperatur und 20 h bei 40°C wurde ein Kunststoff erhalten, von welchem aufgrund seiner hohen Sprödigkeit keine Dehnung oder Zugfestigkeit bestimmt werden konnten.

## Patentansprüche

1. Zusammensetzungen enthaltend
A) ein Polyisocyanatprepolymer, das über Allophanatgruppen gebundene Polyethergruppen aufweist und
B) Polyamine mit mindestens zwei primären Aminogruppen, sowie
C) gegebenenfalls weitere Polyisocyanate.

2. Zusammensetzungen gemäß Anspruch 1, **dadurch gekennzeichnet, dass** die in A) eingesetzten Allophanate hergestellt werden, indem
A1) ein oder mehrere aliphatische und/oder cycloaliphatische Polyisocyanate mit
A2) einer oder mehreren Polyhydroxyverbindungen, wobei wenigstens eine ein Polyetherpolyol ist,
zu einem NCO-funktionellen Polyurethanprepolymer umgesetzt werden und dessen so gebildete Urethangruppen dann anschließend unter Zugabe von
A3) Polyisocyanaten, welche verschieden von denen aus A1) sein können und
A4) Katalysatoren
A5) gegebenenfalls Stabilisatoren
teilweise oder vollständig allophanatisiert werden.

3. Zusammensetzungen gemäß Anspruch 2, **dadurch gekennzeichnet, dass** bei der Herstellung der in A) eingesetzten Allophanate in den Komponenten A1) und A3) Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanat, IPDI) als Polyisocyanate eingesetzt werden.

4. Zusammensetzungen gemäß Anspruch 2 oder 3, **dadurch gekennzeichnet, dass** in A1) und A3) Polyisocyanate vom gleichen Typ eingesetzt werden.

5. Zusammensetzungen gemäß einem der Ansprüche 2 bis 4, **dadurch gekennzeichnet, dass** zur Allophanatisierung in A4) als Katalysatoren Zink(II)-Verbindungen eingesetzt werden.

6. Zusammensetzungen gemäß Anspruch 5, **dadurch gekennzeichnet, dass** als Zink(II)-Verbindungen Zink(II)bis(2-ethylhexanoat), Zn(II)bis(n-oktoat), Zn(II)bis(stearat) oder deren Mischungen verwendet werden.

7. Zusammensetzungen gemäß einem der Ansprüche 2 bis 6, **dadurch gekennzeichnet, dass** in A2) ausschließlich Polyetherpolyole eingesetzt werden, wobei diese zahlenmittlere Molekulargewichte Mₙ von 2000 bis 6000 g/mol, eine mittlere OH-Funktionalität von ≥ 1,95 und einen Grad an ungesättigten Endgruppen von kleiner oder gleich 0,01 meq/g nach ASTM D2849-69 aufweisen.

8. Zusammensetzungen gemäß einem der Ansprüche 2 bis 7, **dadurch gekennzeichnet, dass** das Molverhältnis der OH-Gruppen der Verbindungen der Komponente A2) zu den NCO-Gruppen der Polyisocyanate aus A1) und A3) 1 : 2 bis 1 : 10 beträgt.

9. Zusammensetzungen gemäß einem der Ansprüche 2 bis 8, **dadurch gekennzeichnet, dass** in A5) als Stabilisatoren anorganische oder organische Säuren, Säurehalogenide oder Ester eingesetzt werden.

10. Zusammensetzungen gemäß einem der Ansprüche 1 bis 9, **dadurch gekennzeichnet, dass** in B) aromatische Diamine mit primären Aminogruppen eingesetzt werden.

11. Beschichtungen erhältlich aus Zweikomponenten-Beschichtungssystemen gemäß einem der Ansprüche 1 bis 10.

12. Substrate beschichtet mit Beschichtungen gemäß Anspruch 11.

## Claims

1. Compositions comprising
A) a polyisocyanate prepolymer which has polyether groups attached via allophanate groups, and
B) polyamines containing at least two primary amino groups, and also
C) optionally further polyisocyanates.

2. Compositions according to Claim 1, **characterized in that** the allophanates employed in A) are prepared by reacting
A1) one or more aliphatic and/or cycloaliphatic polyisocyanates with
A2) one or more polyhydroxy compounds, at least one being a polyether polyol,
to give an NCO-functional polyurethane prepolymer and then subsequently subjecting its urethane groups thus formed to partial or complete allophanatization with the addition of
A3) polyisocyanates, which may be different from those from A1), and
A4) catalysts
A5) optionally stabilizers.

3. Compositions according to Claim 2, **characterized in that** in the preparation of the allophanates employed in A) hexane diisocyanate (hexamethylene diisocyanate, HDI), 4,4'-methylenebis(cyclohexyl isocyanate) and/or 3,5,5-trimethyl-1-isocyanato-3-isocyanatomethylcyclohexane (isophorone diisocyanate, IPDI) are used as polyisocyanates in components A1) and A3).

4. Compositions according to Claim 2 or 3, **characterized in that** polyisocyanates of the same type are employed in A1) and A3).

5. Compositions according to any one of Claims 2 to 4, **characterized in that** zinc(II) compounds are used as catalysts for allophanatization in A4).

6. Compositions according to Claim 5, **characterized in that** zinc(II) compounds used are zinc(II) bis(2-ethylhexanoate), Zn(II) bis(n-octoate), Zn(II) bis(stearate) or mixtures thereof.

7. Compositions according to any one of Claims 2 to 6, **characterized in that** polyether polyols are employed exclusively in A2), these polyols having number-average molecular weights Mₙ of 2000 to 6000 g/mol, an average OH functionality of ≥ 1.95 and a degree of unsaturated end groups of less than or equal to 0.01 meq/g in accordance with ASTM D2849-69.

8. Compositions according to any one of Claims 2 to 7, **characterized in that** the molar ratio of the OH groups of the compounds of component A2) to the NCO groups of the polyisocyanates from A1) and A3) is 1:2 to 1:10.

9. Compositions according to any one of Claims 2 to 8, **characterized in that** organic or inorganic acids, acid halides or esters are employed as stabilizers in A5).

10. Compositions according to any one of claims 1 to 9, **characterized in that** aromatic diamines containing primary amino groups are employed in B).

11. Coatings obtainable from two-component coating systems according to any one of Claims 1 to 10.

12. Substrates coated with coatings according to Claim 11.

## Revendications

1. Compositions contenant
A) un prépolymère polyisocyanate, qui présente des radicaux polyéther liés par des radicaux allophanate, et
B) des polyamines avec au moins deux radicaux amino primaire, ainsi que
C) le cas échéant, d'autres polyisocyanates.

2. Compositions suivant la revendication 1, **caractérisées en ce que** les allophanates mis en oeuvre dans A) sont préparés **en ce que** l'on fait réagir
A1) un ou plusieurs polyisocyanates aliphatiques et/ou cycloaliphatiques, avec
A2) un ou plusieurs composés polyhydroxylés, où au moins un est un polyéther-polyol,
en un prépolymère polyuréthanne à fonction NCO, et ses radicaux uréthanne ainsi formés sont ensuite partiellement ou complètement allophanatisés par addition de
A3) des polyisocyanates, qui peuvent être différents de ceux de A1), et
A4) des catalyseurs
A5) le cas échéant, des stabilisants.

3. Compositions suivant la revendication 2, **caractérisées en ce que** lors de la préparation de l'allophanate mis en oeuvre dans A), on met en oeuvre comme composants A1) et A3), l'hexanediisocyanate (hexaméthylènediisocyanate, HDI), le 4,4'-méthylène-bis (cyclohexylisocyanate) et/ou le 3,5,5-triméthyl-1-isocyanato-3-isocyanatométhylcyclohexane (isophorone-diisocyanate, IPDI), comme polyisocyanate.

4. Compositions suivant la revendication 2 ou 3, **caractérisées en ce que**, on met en oeuvre en A1 et A3) des polyisocyanates de même type.

5. Compositions suivant l'une des revendications 2 à 4, **caractérisées en ce que** l'on met en oeuvre des composés du zinc (II) comme catalyseurs en A4) pour l'allophanatisation.

6. Compositions suivant la revendication 5, **caractérisées en ce que** comme composés du zinc (II), on utilise le bis(2-éthylhexanoate) de zinc (II), le bis(n-octoate) de zinc (II), le bis (stéarate) de zinc (II)ou leurs mélanges.

7. Compositions suivant l'une des revendications 2 à 6, **caractérisées en ce que** l'on met en oeuvre en A2), exclusivement des polyéther-polyols, où ceux-ci présentent un poids moléculaire moyen en nombre Mn allant de 2000 à 6000 g/mole, une fonctionnalité OH moyenne ≥ 1,95 et une teneur en groupes terminaux insaturés inférieur ou égal à 0,01 méq/g selon ASTM D2849-69.

8. Compositions suivant l'une des revendications 2 à 7, **caractérisées en ce que** le rapport molaire des radicaux OH des composés du composant A2) aux radicaux NCO des polyisocyanates de A1) et de A3) se situe dans l'intervalle allant de 1:2 à 1:10.

9. Compositions suivant l'une des revendications 2 à 8, **caractérisées en ce que** l'on met en oeuvre comme stabilisant en A5), des acides inorganiques ou organiques, des halogénures d'acide ou des esters.

10. Compositions suivant l'une des revendications 1 à 9, **caractérisées en ce que** l'on met en oeuvre en B), des diamines aromatiques avec des radicaux amino primaires.

11. Revêtements obtenus à partir de systèmes de revêtement à deux composants suivant l'une des revendications 1 à 10.

12. Substrats revêtus avec les revêtements suivant la revendication 11.
